# EUROPEAN PATENT APPLICATION

(11) **EP 4 513 637 A1**
(43) Date of publication of application: **26.02.2025**
(21) Application number: 24172974.8
(22) Date of filing: 29.04.2024
(51) Int. Cl.: H01M 50/103, H01M 50/15, H01M 50/169, H01M 50/176, H01M 50/188, H01M 50/30, H01M 50/528, H01M 50/545, H01M 50/548, H01M 50/55, H01M 50/586, H01M 50/593

(54) **SECONDARY BATTERY**

(30) Priority: 23.08.2023 KR 20230110476
(71) Applicant: Samsung SDI Co., Ltd., Yongin-si, Gyeonggi-do 17084 (KR)
(72) Inventor: Bae, Kwang Soo, 17084 Yongin-si, Gyeonggi-do (KR); Yong, Jun Sun, 17084 Yongin-si, Gyeonggi-do (KR); Lee, Jun Hyung, 17084 Yongin-si, Gyeonggi-do (KR); Kim, Ji Hwan, 17084 Yongin-si, Gyeonggi-do (KR); Roh, Heyoung Cheoul, 17084 Yongin-si, Gyeonggi-do (KR); Bae, Chae Eun, 17084 Yongin-si, Gyeonggi-do (KR)
(74) Representative: Gulde & Partner

(57) **Abstract**

A secondary battery (100) includes an electrode assembly (110) including a first tab (1111) and a second tab (1121) at opposite ends of the electrode assembly (110) in a longitudinal direction, respectively; a case (120) configured to accommodate the electrode assembly (110) and in which a first opening (121) and a second opening (122) are defined at opposite ends of the case (120) in the longitudinal direction, respectively; a first cap plate (131) coupled to the first opening (121) of the case (120) and insulated from and penetrated by a first terminal (161) that is electrically coupled to the first tab (1111) of the electrode assembly (110), the first cap plate (131) including a second terminal (162) electrically coupled to the second tab (1121) of the electrode assembly (110); and a second cap plate (132) coupled to the second opening (122) of the case (120) and electrically coupled to the second tab (1121) of the electrode assembly (110).

## Description

### BACKGROUND

### 1. Field

Aspects of embodiments of the present disclosure relate to a secondary battery.

### 2. Description of the Related Art

Secondary batteries are rechargeable, unlike primary batteries. In these secondary batteries, a low-capacity battery including a battery cell in the form of a pack may be used in portable small electronic devices, such as smartphones and digital cameras, and a high-capacity battery module including tens to hundreds of battery packs connected to each other may be used as a power source for driving motors, e.g., of hybrid vehicles, electric vehicles, and the like.

A rechargeable secondary battery includes an electrode assembly, in which a separator is interposed between a positive electrode plate and a negative electrode plate, a current collector plate electrically connected to the electrode assembly, a terminal electrically connected to the current collector plate, a case accommodating the electrode assembly and the current collector plate, and a cap plate which seals the case and through which the terminal passes to be coupled.

The above-described information disclosed in the technology is provided as a background of the present disclosure for improving understanding of the background of the present disclosure and thus may include information that does not constitute the related art.

### SUMMARY

According to an aspect of one or more embodiments of the present disclosure, a secondary battery that has an improved anti-vibration property and is improved in terms of energy density or a current flow is provided.

According to one or more embodiments, a secondary battery includes: an electrode assembly including a first tab and a second tab at opposite ends of the electrode assembly in a longitudinal direction, respectively; a case configured to accommodate the electrode assembly and in which a first opening and a second opening are defined at opposite ends of the case in the longitudinal direction, respectively; a first cap plate coupled to the first opening of the case and insulated from and penetrated by a first terminal that is electrically coupled to the first tab of the electrode assembly, the first cap plate including a second terminal electrically coupled to the second tab of the electrode assembly; and a second cap plate coupled to the second opening of the case and electrically coupled to the second tab of the electrode assembly.

The secondary battery may further include a first current collector plate configured to electrically couple the first tab to the first terminal.

The first current collector plate may include: a first current collector plate flat part welded to the first tab; and a first current collector plate protrusion welded to the first terminal.

The secondary battery may further include a first insulating plate between the first current collector plate and the first cap plate, and may even further include a first insulating plate through-hole through which the first current collector plate protrusion passes.

The secondary battery may further include a second current collector plate configured to electrically couple the second tab to the second cap plate.

The second current collector plate may include: a second current collector plate flat part welded to the second tab; and a second current collector plate protrusion welded to the second cap plate.

The secondary battery may further include a second insulating plate between the second current collector plate and the second cap plate, and may even further include a second insulating plate through-hole through which the second current collector plate protrusion passes.

The second cap plate may include a second cap plate protrusion welded to the second current collector plate protrusion.

The second cap plate may include a vent hole and a safety vent coupled to the vent hole.

The second insulating plate may include a vent through-hole in a region corresponding to the safety vent.

The first cap plate may include a main through-hole through which the first terminal passes and a sub through-hole around the main through-hole, and the first cap plate may further include an insulating member coupled to the main through-hole and the sub through-hole to insulate the first terminal from the first cap plate.

The case may include a pair of long sides and a pair of short sides connected to the pair of long sides, and a welding line may be provided on at least one short side of the pair of short sides.

The electrode assembly may include a pair of long sides and a pair of short sides connected to the pair of long sides, and the secondary battery may further include a short-side insulating plate between a short side of the pair of short sides and the case.

The first cap plate may further include a second terminal accommodation recess and a second terminal accommodation protrusion, and the second terminal may be accommodated in the second terminal accommodation recess and coupled to the second terminal accommodation protrusion.

The second cap plate may further include a liquid injection hole and a plug configured to block the liquid injection hole.

Each of the electrode assembly and the case may have a vertical length greater than a horizontal width.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

The accompanying drawings are included to provide a further understanding of the present disclosure, and are incorporated in and constitute a part of this specification. The drawings illustrate some example embodiments of the present disclosure and, together with the description, serve to explain principles of the present disclosure. In the drawings:
FIG. 1 illustrates a perspective view of a secondary battery according to an embodiment;
FIG. 2 is a cross-sectional view illustrating the secondary battery of FIG. 1;
FIG. 3 illustrates a plan view of an electrode assembly of the secondary battery according to an embodiment; and
FIG. 4 illustrates an exploded perspective view of the secondary battery according to an embodiment.

### DETAILED DESCRIPTION

Herein, some embodiments will be described in further detail with reference to the accompanying drawings.

The present disclosures may, however, be embodied in many different forms and should not be construed as being limited to the embodiments set forth herein; rather, these embodiments are provided so that those skilled in the art may thoroughly understand the present disclosure. Rather, these embodiments are provided so that this disclosure will be thorough and complete, and will fully convey the scope of the present disclosure to those skilled in the art.

In addition, in the following drawings, the thickness or size of each layer may be exaggerated for convenience and clarity of description, and the same reference numerals in the drawings refer to the same elements. As used herein, the term "and/or" includes any and all combinations of one or more of the associated listed items. In this specification, it is to be understood that if a member A is referred to as being connected to a member B, the member A may be directly connected to the member B or indirectly connected to the member B with one or more members C therebetween.

The terms used in this specification are for illustrative purposes of the present disclosure and should not be construed to limit the meaning or the scope of the present disclosure. As used in this specification, a singular form may, unless definitely indicating a particular case in terms of the context, include a plural form. Also, the expressions "comprise/include" and/or "comprising/including" used in this specification neither define the mentioned shapes, numbers, steps, operations, members, elements, and/or groups of these, nor exclude the presence or addition of one or more other different shapes, numbers, steps, operations, members, elements, and/or groups of these, or addition of these. The term "and/or" used herein includes any and all combinations of one or more of the associated listed items.

As used herein, terms such as "first," "second," etc. are used to describe various members, components, areas, layers, and/or portions. However, it is to be understood that the members, components, areas, layers, and/or portions should not be defined by these terms. The terms do not mean a particular order, up and down, or superiority, and are used for distinguishing one member, component, region, layer, or portion from another member, component, region, layer, or portion. Thus, a first member, component, region, layer, or portion which will be described may also refer to a second member, component, region, layer, or portion, without departing from the teaching of the present disclosure.

Spatially relative terms, such as "below," "beneath," "lower," "above," "upper," and the like, may be used herein for ease of description to describe one element or feature's relationship to another element(s) or feature(s), referring to the figures. These spatially relative terms are intended for ease of comprehension of the present invention according to various process states or usage states of the present invention, and, thus, the present disclosure is not limited thereto. For example, if an element or feature shown in the drawings is turned, the element or feature described as "beneath" or "below" may change into "above" or "upper." Thus, the term "lower" may encompass the term "upper" or "below."

Unless otherwise defined, all terms (including technical and scientific terms) used herein have the same meaning as commonly understood by one of ordinary skill in the art to which the inventive concept pertains. It is also to be understood that terms defined in commonly used dictionaries should be interpreted as having meanings consistent with the meanings in the context of the related art, and are expressly defined herein unless they are interpreted in an ideal or overly formal sense.

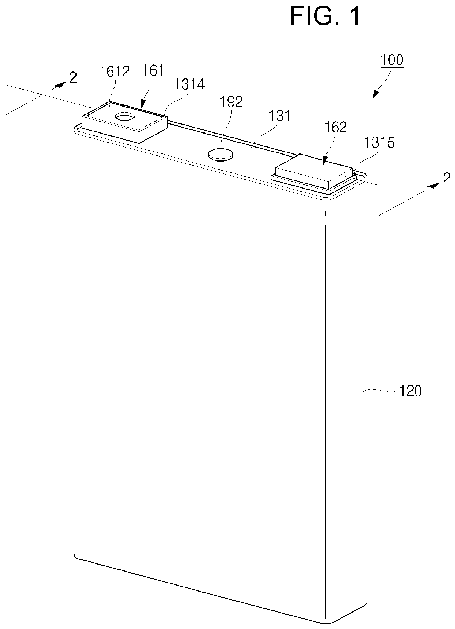

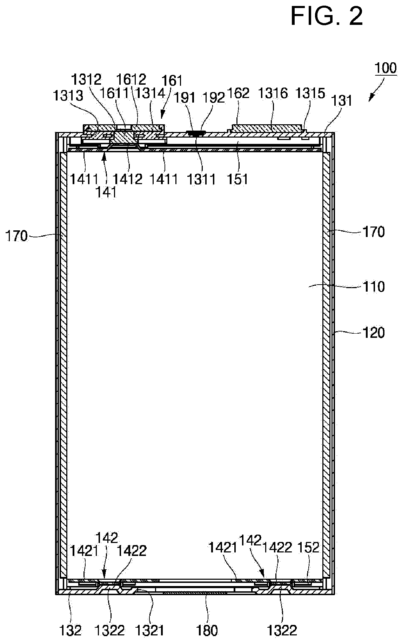

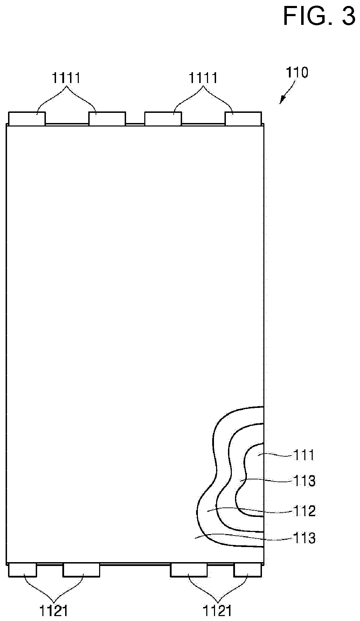

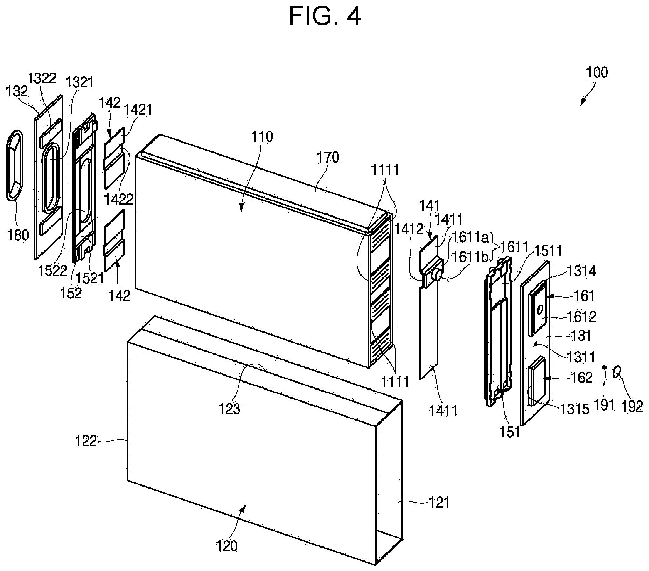

FIG. 1 illustrates a perspective view of a secondary battery 100 according to an embodiment; FIG. 2 is a cross-sectional view illustrating the secondary battery 100, taken along the line 2-2 of FIG. 1, according to an embodiment; FIG. 3 illustrates a plan view of an electrode assembly 110 in the secondary battery 100 according to an embodiment; and FIG. 4 illustrates an exploded perspective view of the secondary battery 100 according to an embodiment. Here, the electrode assembly 110 in FIG. 3 illustrates a state before a first tab 1111 and a second tab 1121 are bent.

Referring to FIGS. 1 to 4, the secondary battery 100 according to an embodiment of the present disclosure may include the electrode assembly 110, a case 120, a first cap plate 131, and a second cap plate 132.

In some embodiments, the secondary battery 100 according to the present disclosure may further include a first current collector plate 141 and a second current collector plate 142.

In some embodiments, the secondary battery 100 according to the present disclosure may further include a first insulating plate 151 and a second insulating plate 152.

In some embodiments, the secondary battery 100 according to the present disclosure may further include a first terminal 161 and a second terminal 162.

In some embodiments, the secondary battery 100 according to the present disclosure may further include a short-side insulating plate 170.

In some embodiments, the secondary battery 100 according to the present disclosure may further include a safety vent 180, a liquid injection metal ball 191, and a liquid injection plug 192.

In an embodiment, the electrode assembly 110 may be provided in the form of a substantially rectangular hexahedral shape having a pair of long sides in a longitudinal direction and a pair of short sides in the longitudinal direction. In some embodiments, a surface area of each of the long sides may be wider than that of each of the short sides. In some embodiments, the long side and/or the short side may have a length and a width. Here the length may be longer than the width. In some embodiments, the length may be approximately 200 mm to approximately 400 mm. In some embodiments, the electrode assembly 110 may include a first electrode plate 111 (e.g., a positive electrode plate), a second electrode plate 112 (e.g., a negative electrode plate), and a separator 113 between the first electrode plate 111 and the second electrode plate 112. In some embodiments, the first electrode plate 111 may include a plurality of first tabs 1111 (e.g., positive electrode tabs) protruding to the outside (e.g., at an upper side) of the electrode assembly 110, and the second electrode plate 112 may include a plurality of second tabs 1121 (e.g., negative electrode tabs) protruding to the outside (e.g., at a lower side) of the electrode assembly 110. In some embodiments, the electrode assembly 110 may include a first tab 1111 provided on an end (for example, an upper end) in the longitudinal direction and a second tab 1121 provided on an opposite end (for example, a lower end) in the longitudinal direction. In some embodiments, the electrode assembly 110 may be of a stack type in which the first electrode plate 111, the separator 113, and the second electrode plate 112 are stacked, or a winding type in which the first electrode plate 111, the separator 113, and the second electrode plate 112 are wound. In some embodiments, the electrode assembly 110 may include or be referred to as an electrode group.

In some embodiments, the first electrode plate 111 may be provided by applying a first active material, such as a transition metal oxide, to a first current collector made of metal foil, such as aluminum, and may include the first tab 1111 (e.g., an area that is not coated with the first active material) extending and protruding toward the first cap plate 131 of a current collector. The first tab 1111 extending and protruding in this manner may also be referred to as a first non-coating portion tab or a first base material tab, and the first tabs 1111 may be aligned at a same position through a stacking or winding process for manufacturing the electrode assembly 110 to provide a multi-tab. The first tab 1111 may be electrically connected to the first terminal 161 to serve as a passage through which current flows between the first electrode plate 111 and the first terminal 161.

In some embodiments, the second electrode plate 112 may be provided by applying a second active material, such as graphite or carbon, to a second current collector made of metal foil, such as copper or nickel, and may include the second tab 1121 (e.g., an area that is not coated with the second active material) extending and protruding toward the second cap plate 132 of a current collector. The second tab 1121 extending and protruding in this manner may also be referred to as a second non-coating portion tab or a second base material tab, and the second tabs 1121 may be aligned at a same position through a stacking or winding process for manufacturing the electrode assembly 110 to provide a multi-tab. The second tab 1121 may be electrically connected to the second terminal 162 to serve as a passage through which current flows between the second electrode plate 112 and the second terminal 162.

The separator 113 may be interposed between the first electrode plate 111 and the second electrode plate 112 to prevent or substantially prevent a short circuit between the first electrode plate 111 and the second electrode plate 112 and enable movement of lithium ions. In some embodiments, the separator 113 may be wider (e.g., slightly wider) than a surface area of each of the first electrode plate 111 and the second electrode plate 112 to further protrude in an upward and downward direction and/or a left and right direction than each of the first electrode plate 111 and the second electrode plate 112. In some embodiments, the separator 113 may prevent or substantially prevent the first electrode plate 111 and the second electrode plate 112 from being in direct contact with the case 120, the first cap plate 131, and the second cap plate 132 in the upward and downward direction and/or left and right direction of the electrode assembly 110.

In some embodiments, the electrode assembly 110 may be accommodated in the case 120 together with an electrolyte. In some embodiments, the electrolyte may include an organic solvent, such as ethylene carbonate (EC), propylene carbonate (PC), diethyl carbonate (DEC), ethylmethyl carbonate (EMC), and/or dimethyl carbonate (DMC), and lithium salt, such as LiPF₆ or LiBF₄. In some embodiments, the electrolyte may be liquid, solid, or gel.

The case 120 may accommodate the electrode assembly 110 and may include a first opening 121 and a second opening 122, which are provided at opposite ends in the longitudinal direction. In some embodiments, the case 120 may be provided in the form of a substantially rectangular hexahedral shape having a pair of long sides in the longitudinal direction and a pair of short sides in the longitudinal direction. In some embodiments, a surface area of each of the long sides may be wider than that of each of the short sides. In some embodiments, the long side and/or the short side may have a length and a width. Here, the length may be longer than the width. In some embodiments, the length may be approximately 200 mm to approximately 400 mm. In some embodiments, the first opening 121 may be an upper opening defined by the pair of long sides and the pair of short sides, and the second opening 122 may be a lower opening defined by the pair of long sides and the pair of short sides. In some embodiments, the case 120 may include at least one welding line 123 provided in the longitudinal direction of the short sides. In some embodiments, the case 120 may be provided by bending a metal flat plate into a hollow rectangular hexahedral shape and then laser welding ends to each other. Here, the welding line 123 may be provided. In some embodiments, the case 120 may be provided by extruding molten metal into an empty tube shape. In some embodiments, the case 120 may be manufactured in a deep drawing manner and then be cut at a side thereof to provide the case 120 with both sides open. In some embodiments, the case 120 may be made of a conductive metal, such as aluminum, an aluminum alloy, or steel plated with nickel. In some embodiments, case 120 may include or be referred to as a can. In some embodiments, the long side of the case 120 may be in close contact with the long side of the electrode assembly 110, and the short side of the case 120 may be in close contact with the short side of the electrode assembly 110.

The first cap plate 131 may be provided in a substantially rectangular plate shape and may be coupled to the first opening 121 of the case 120. In some embodiments, the cap plate 131 may close (or seal) the first opening 121 of the case 120 and may be laser welded to the case 120. In some embodiments, the first cap plate 131 may include a liquid injection hole 1311 through which an electrolyte may be injected. The liquid injection hole 1311 may be closed with a metal ball 191 and a plug 192. In some embodiments, the first terminal 161 electrically coupled to the first tab 1111 of the electrode assembly 110 may be insulated from and penetrate the first cap plate 131. In some embodiments, the second terminal 162 electrically coupled to the second tab 1121 of the electrode assembly 110 may be coupled to the first cap plate 131. The second terminal 162 may be provided to be integrated with the first cap plate 131 or may be mechanically coupled (electrically short-circuited) to the first cap plate 131. In some embodiments, the first cap plate 131 may be made of a conductive metal, such as aluminum, an aluminum alloy, or nickel-plated steel and may also be referred to as a cap assembly in some cases.

The second cap plate 132 may be provided in a substantially rectangular plate shape and may be coupled to the second opening 122 of the case 120. In some embodiments, the second cap plate 132 may close (or seal) the second opening 122 of the case 120 and may be laser welded to the case 120. In some embodiments, the second cap plate 132 may further include a vent hole 1321 into which the safety vent 180 is coupled. In some embodiments, the second cap plate 132 may further include a second cap plate protrusion 1322 that is electrically coupled to the second tab 1121 of the electrode assembly 110. In some embodiments, the second cap plate protrusion 1322 may be provided at each of opposite sides of the vent hole 1321. In some embodiments, the second cap plate protrusion 1322 may have a shape that protrudes toward the second tab 1121. In some embodiments, the second cap plate protrusion 1322 may be provided by placing the second cap plate 132, which is provided in the form of a flat plate, on a mold or die and then pressing a partial area of the second cap plate 132 through a punch. In addition, thicknesses of the second cap plate 132 and the second cap plate protrusion 1322 may be the same or similar. In some embodiments, the second cap plate 132 may be made of a conductive metal, such as aluminum, an aluminum alloy, or nickel-plated steel and may also be referred to as a cap assembly in some cases.

The first current collector plate 141 may be interposed between the electrode assembly 110 and the first cap plate 131. In some embodiments, the first current collector plate 141 may have a substantially rectangular plate shape. The first current collector plate 141 may electrically/mechanically couple the first tab 1111 of the electrode assembly 110 to the first terminal 161. In some embodiments, the first current collector plate 141 may include a first current collector plate flat part 1411 welded (e.g., laser welded) to the first tab 1111 and a first current collector plate protrusion 1412 welded (e.g., laser welded) to the first terminal 161. In some embodiments, the first tab 1111 of the electrode assembly 110 may be bent in a direction to facilitate the welding to the first current collector flat part 1411. In some embodiments, the first tabs 1111 may be bent and in close contact with a surface of the electrode assembly 110 and thus may be pre-welded to each other. In some embodiments, a terminal pillar 1611, which is a component of the first terminal 161, may be welded on the first current collector plate protrusion 1412 in advance. The terminal pillar 1611 may include a base 1611a welded on the first current collector plate protrusion 1412 and a cylindrical-type protrusion 1611b protruding in a direction away from the base 1611a. In some embodiments, the first current collector plate 141 may be made of a conductive metal, such as aluminum, an aluminum alloy, or nickel-plated steel, and may also be referred to as a current collector or sub plate in some cases.

The second current collector plate 142 may be interposed between the electrode assembly 110 and the second cap plate 132. In some embodiments, the second current collector plate 142 may have a substantially rectangular plate shape. The second current collector plate 142 may electrically couple the second tab 1121 of the electrode assembly 110 to the second terminal 162. In some embodiments, the second current collector plate 142 may electrically/mechanically couple the second tab 1121 to the second cap plate 132. In some embodiments, the second current collector plate 142 may include a second current collector plate flat part 1421 welded (e.g., laser welded) to the second tab 1121 and a second current collector plate protrusion 1422 welded (e.g., laser welded) to the second cap plate 132. In some embodiments, the second current collector plate protrusion 1422 may be welded to the second cap plate protrusion 1322. In some embodiments, two second cap plate protrusions 1322 are provided, and, thus, two second current collector plates 142 may be provided. In some embodiments, the second tab 1121 of the electrode assembly 110 may be bent in a direction to facilitate the welding to the second current collector flat part 1421. In some embodiments, the second tabs 1121 may be bent and in close contact with a surface of the electrode assembly 110 and thus may be pre-welded to each other. In some embodiments, the second current collector plate 142 may be made of a conductive metal, such as copper, a copper alloy, nickel, a nickel alloy, or nickel-plated steel, and may also be referred to as a current collector or sub plate in some cases.

The first insulating plate 151 may be interposed between the first current collector plate 141 and the first cap plate 131. In some embodiments, the first insulating plate 151 may have a substantially rectangular plate shape. In some embodiments, the first insulating plate 151 may include a first insulating plate through-hole 1511 through which the first current collector plate protrusion 1412 and the terminal pillar 1611 of the first terminal 161 passes. The first insulating plate 151 may minimize or reduce an empty space between the first current collector plate 141 and the first cap plate 131, and, thus, when an external impact is applied to the secondary battery 100, the electrode assembly 110 may not move within the case 120. In some embodiments, the first insulating plate 151 may include polyethylene (PE), polypropylene (PP), double synthetic rubber (EPDM), or nylon, which does not react with the electrolyte.

The second insulating plate 152 may be interposed between the second current collector plate 142 and the second cap plate 132. In some embodiments, the second insulating plate 152 may have a substantially rectangular plate shape. In some embodiments, the second insulating plate 152 may include a second insulating plate through-hole 1521 through which the second current collector plate protrusion 1422 and/or the second cap plate protrusion 1322 pass. In some embodiments, the second insulating plate 152 may further include a vent through-hole 1522 provided in a region corresponding to the vent hole 1321 of the second cap plate 132 and the safety vent 180. The second insulating plate 152 may minimize or reduce an empty space between the second current collector plate 142 and the second cap plate 132, and, thus, when an external impact is applied to the secondary battery 100, the electrode assembly 110 may not move within the case 120. In some embodiments, the second insulating plate 152 may include polyethylene (PE), polypropylene (PP), double synthetic rubber (EPDM), or nylon, which does not react with the electrolyte.

The first terminal 161 may be coupled to pass through the first cap plate 131. In some embodiments, the first terminal 161 may include the terminal pillar 1611 and a terminal plate 1612. A lower portion of the terminal pillar 1611 may be welded to the first current collector plate protrusion 1412, and an upper portion of the terminal pillar 1611 may be welded to the terminal plate 1612. In some embodiments, the first cap plate 131 may include a main through-hole 1312 through which the terminal pillar 1611 passes and a sub through-hole 1313 provided around the main through-hole 1312, and may further include an insulating member 1314 that is coupled to the main through-hole 1312 and the sub through-hole 1313 to insulate the terminal pillar 1611 and the terminal plate 1612 from the first cap plate 131. In some embodiments, the terminal pillar 1611 may pass through the insulating member 1314, and the terminal plate 1612 may be disposed on the insulating member 1314, and, thus, the first terminal 161 may be insulated from the first cap plate 131. In some embodiments, the first terminal 161, that is, the terminal pillar 1611 and the terminal plate 1612 may be made of a conductive metal, such as aluminum, an aluminum alloy, or nickel-plated steel. In some embodiments, the insulating member 1314 may include PP, PE, or EPDM. In some embodiments, the insulating member 1314 may be provided to be integrated with the first cap plate 131 in a double injection manner.

The second terminal 162 may be provided to be integrated with the first cap plate 131 or may be coupled to the first cap plate 131 in a short-circuited state. In some embodiments, the first cap plate 131 may further include a second terminal accommodation protrusion 1315 and a second terminal accommodation recess 1316, and the second terminal 162 may be accommodated in the second terminal accommodation recess 1316 and coupled and/or welded to the second terminal accommodation protrusion 1315. In some embodiments, the second terminal 162 may be made of a conductive metal, such as aluminum, an aluminum alloy, or nickel-plated steel. In some embodiments, the first terminal 161 and the second terminal 162 may be similar or the same in outer appearance. In some embodiments, heights of the first terminal 161 and the second terminal 162 may be similar or the same.

The short side insulating plate 170 may be provided between the short side of the electrode assembly 110 and the short side of the case 120. The short side insulating plate 170 may have a substantially rectangular plate shape. In some embodiments, two short side insulating plates 170 may be provided on the two short sides of the electrode assembly 110, respectively. In some embodiments, the short side insulating plate 170 may minimize or reduce an empty space between the short side of the electrode assembly 110 and the short side of the case 120 prevent or substantially prevent the electrode assembly 110 from moving within the case 120 when an external impact is applied to the secondary battery 100. In some embodiments, the short side insulating plate 170 may include PP, PE, or EPDM.

The safety vent 180 may be coupled to the vent hole 1321 provided in the second cap plate 132 as described above. In some embodiments, a thickness of the safety vent 180 may be less than that of the second cap plate 132, and the safety vent 180 may also be provided with a plurality of notches. The safety vent 180 may be ruptured when an internal pressure of the case 120 is greater than a reference pressure such that the internal pressure of the case 120 is similar to or equal to atmospheric pressure. In some embodiments, the safety vent 180 may include aluminum or an aluminum alloy.

The liquid injection hole plug 192 may be coupled to the liquid injection hole 1311 of the first cap plate 131. After injection of the electrolyte is completed through the liquid injection hole 1311 of the first cap plate 131, the liquid injection hole plug 192 may block the liquid injection hole 1311. In some embodiments, after the completion of the injection of the electrolyte, the metal ball 191 having a diameter that is slightly larger than that of the liquid injection hole 1311 may be coupled to the liquid injection hole 1311, and, then, the liquid injection hole plug 192 may be coupled to the liquid injection hole 1311 to prevent or substantially prevent the electrolyte from leaking. In some embodiments, hardness of the metal ball 191 and the liquid injection hole plug 192 may be less than that of the first cap plate 131, and thus, the metal ball 191 and the liquid injection hole plug 192 may be elastically deformed and then be coupled to the liquid injection hole 1311.

As a result, in embodiments of the present disclosure, the plate-shaped current collector plates and the plate-shaped insulating plates may be disposed at both of the opposite sides of the electrode assembly 110, respectively, to minimize or reduce a gap between the electrode assembly 110 and the cap plate, thereby minimizing or reducing movement of the electrode assembly 110 within the case 120, even when an external impact is applied to the secondary battery 100. In one or more embodiments, the anti-vibration characteristics of the secondary battery 100 may be improved.

In addition, in embodiments of the present disclosure, the positive electrode tab and the negative electrode tab may be provided at both of the opposite sides of the electrode assembly 110, and, thus, a flow of the charging and discharging current may follow the longitudinal direction of the secondary battery 100. In one or more embodiments, when charging and discharging the secondary battery 100, the charging and discharging current may flow in the longitudinal direction of the electrode assembly 110, and, thus, all regions of the electrode assembly 110 may be uniformly or substantially uniformly charged and discharged of the secondary battery 100. Therefore, energy density of the secondary battery 100 may be improved, and the current flow characteristics may also be improved.

According to embodiments of the present disclosure, the secondary battery is provided, in which the gap between the electrode assembly and the case (cap plate) is minimized or reduced to improve an anti-vibration property, and the positive electrode tab and the negative electrode tab of the electrode assembly are provided on both the ends facing away from each other in the longitudinal direction to improve the density or current flow characteristics.

While some example embodiments of the secondary battery are provided herein, the present disclosure is not limited to the foregoing embodiments, and it is to be understood by those of ordinary skill in the art that various changes in form and details may be made therein without departing from the scope of the present disclosure as set forth by the appended claims.

## Claims

1. A secondary battery (100) comprising:
an electrode assembly (110) comprising a first tab (1111) and a second tab (1121) at opposite ends of the electrode assembly (110) in a longitudinal direction, respectively;
a case (120) configured to accommodate the electrode assembly (110) and in which a first opening (121) and a second opening (122) are defined at opposite ends of the case (120) in the longitudinal direction, respectively;
a first cap plate (131) coupled to the first opening (121) of the case (120) and insulated from and penetrated by a first terminal (161) that is electrically coupled to the first tab (1111) of the electrode assembly (110), the first cap plate (131) comprising a second terminal (162) electrically coupled to the second tab (1121) of the electrode assembly (110); and
a second cap plate (132) coupled to the second opening (122) of the case (120) and electrically coupled to the second tab (1121) of the electrode assembly (110).

2. The secondary battery (100) as claimed in claim 1, further comprising a first current collector plate (141) configured to electrically couple the first tab (1111) to the first terminal (161).

3. The secondary battery (100) as claimed in claim 2, wherein the first current collector plate (141) comprises:
a first current collector plate flat part (1411) welded to the first tab (1111); and
a first current collector plate protrusion (1412) welded to the first terminal (161).

4. The secondary battery (100) as claimed in claim 3, further comprising a first insulating plate (151) between the first current collector plate (141) and the first cap plate (131), and comprising a first insulating plate through-hole (1511) through which the first current collector plate protrusion (1412) passes.

5. The secondary battery (100) as claimed in any one of the preceding claims, further comprising a second current collector plate (142) configured to electrically couple the second tab (1121) to the second cap plate (132).

6. The secondary battery (100) as claimed in claim 5, wherein the second current collector plate (142) comprises:
a second current collector plate flat part (1421) welded to the second tab (1121); and
a second current collector plate protrusion (1422) welded to the second cap plate (132).

7. The secondary battery (100) as claimed in claim 6, further comprising a second insulating plate (152) between the second current collector plate (142) and the second cap plate (132), and comprising a second insulating plate through-hole (1521) through which the second current collector plate protrusion (1422) passes.

8. The secondary battery (100) as claimed in claim 7, wherein the second cap plate (132) comprises a vent hole (1321) and a safety vent (180) coupled to the vent hole (1321).

9. The secondary battery (100) as claimed in claim 8, wherein the second insulating plate (152) comprises a vent through-hole (1522) in a region corresponding to the safety vent (180).

10. The secondary battery (100) as claimed in any one of claims 6 to 9, wherein the second cap plate (132) comprises a second cap plate protrusion (1322) welded to the second current collector plate protrusion (1422).

11. The secondary battery (100) as claimed in any one of the preceding claims, wherein the first cap plate (131) comprises a main through-hole (1312) through which the first terminal (161) passes and a sub through-hole (1313) around the main through-hole (1312), and
the first cap plate (131) further comprises an insulating member (1314) coupled to the main through-hole (1312) and the sub through-hole (1313) to insulate the first terminal (161) from the first cap plate (131).

12. The secondary battery (100) as claimed in any one of the preceding claims, wherein:
the case (120) comprises a pair of long sides and a pair of short sides connected to the pair of long sides,
wherein a welding line (123) is provided on at least one of the pair of short sides; and/or
the electrode assembly (110) comprises a pair of long sides and a pair of short sides connected to the pair of long sides,
wherein the secondary battery (100) further comprises a short-side insulating plate (170) between a short side of the pair of short sides and the case (120).

13. The secondary battery (100) as claimed in any one of the preceding claims, wherein the first cap plate (131) further comprises a second terminal accommodation recess (1316) and a second terminal accommodation protrusion (1315),
wherein the second terminal (162) is accommodated in the second terminal accommodation recess (1316) and coupled to the second terminal accommodation protrusion (1315).

14. The secondary battery as claimed in any one of the preceding claims, wherein the second cap plate (132) further comprises a liquid injection hole (1311) and a plug (192) configured to block the liquid injection hole (1311).

15. The secondary battery (100) as claimed in any one of the preceding claims, wherein each of the electrode assembly (110) and the case (120) has a vertical length greater than a horizontal width.
